(19) Europäisches Patentamt
European Patent Office
Office européen des brevets

(11) **EP 4 746 276 A1**

(12) **EUROPEAN PATENT APPLICATION**
published in accordance with Art. 153(4) EPC

(43) Date of publication:
**20.05.2026 Bulletin 2026/21**

(21) Application number: **25795381.0**

(22) Date of filing: **04.08.2025**

(51) International Patent Classification (IPC):
*H02M 7/48* (2007.01)    *H02P 27/04* (2016.01)

(86) International application number:
**PCT/JP2025/027500**

(87) International publication number:
**WO 2026/070031 (02.04.2026 Gazette 2026/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   **30.09.2024   JP 2024171453**

(71) Applicant: DAIKIN INDUSTRIES, LTD.
**Osaka-Shi, Osaka 530-0001 (JP)**

(72) Inventors:
• **HASHIBA, Chihiro**
  **Osaka-shi, Osaka 530-0001 (JP)**
• **HAYASHI, Nobuo**
  **Osaka-shi, Osaka 530-0001 (JP)**
• **DOI, Hirotaka**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **MOTOR CONTROL DEVICE**

(57)    Provided is a motor control device including: a rectifier circuit configured to rectify AC power output from a three-phase AC power supply and output DC power; an inverter circuit having a plurality of switching elements and configured to convert the DC power output from the rectifier circuit into AC power by a switching operation of the plurality of switching elements and supply the AC power to a motor; a DC link capacitor coupled between input nodes of the inverter circuit and having a capacitance value that is set to allow fluctuations in voltage output from the rectifier circuit and to suppress ripple voltage caused by the switching operation of the inverter circuit; and a reactor disposed between the three-phase AC power supply and the DC link capacitor and having an inductance value that is set to suppress ripple current caused by the switching operation. The DC link capacitor and the reactor together function as a filter. The motor control device is configured to, at a timing when a phase $\Theta$, which is based on a phase $\Theta$ of one of line-to-line voltages of the three-phase AC power supply, reaches $\pi/3 \times n$ (where n is an integer greater than or equal to zero), control a magnitude of an output voltage vector of the inverter circuit to change from positive to negative, or from negative to positive, with respect to an average value of the output voltage vector of the inverter circuit when the phase $\Theta$ is within a range satisfying Equation 1:

$$(\text{Equation 1}) \quad n \times \pi/3 \leq \Theta < (n+1) \times \pi/3,$$

where n is an integer greater than or equal to zero.

FIG.4

**Description**

Technical Field

The present disclosure relates to a motor control device.

Background Art

In a motor control device that provides an LC filter function using a rectifier circuit connected to an AC power supply, an inverter, a capacitor (C), and a reactor (L) connected between the AC power supply and the capacitor, the inverter is controlled to reduce harmonic components in the DC voltage caused by resonance in the LC filter. This control reduces the harmonic components in the voltage across the capacitor, thereby reducing distortion in the current input to the motor control device.

Patent Literature 1 discloses that sufficient resonance suppression cannot be achieved by a control method of suppressing resonance by extracting, using a filter, an AC component of the DC link voltage across the capacitor, detected by voltage detection, and then applying a compensation value based on the amount of ripple in the extracted AC component. This is because this method may fail to maintain an appropriate phase angle of the inverter output depending on the magnitude of the motor load, which results in voltage saturation. Thus, Patent Literature 1 discloses a control method including: a phase-advancing unit for outputting a leading-phase AC component obtained by advancing the AC component extracted by a filter unit by 90 degrees; a weighting unit for outputting a value obtained by adding a value obtained by multiplying the AC component by a gain p (where p is a variable that increases as the inverter output increases and varies within the range of $0 \leq p \leq 1$) and a value obtained by multiplying the leading-phase AC component by a gain (1 - p); and a gain for outputting a correction signal obtained by multiplying the output of the weighting unit by a predetermined gain. This control method adjusts the value of p according to the inverter output, thereby achieving a resonance suppression effect with a small compensation value, regardless of the magnitude of the motor load.

Patent Literature 2 discloses a method for controlling a power conversion apparatus, including: detecting a voltage (VL) across a reactor with reference to the potential on the capacitor side; subtracting a compensation value based on the magnitude of VL from a voltage control ratio command, which represents the ratio of an amplitude of the AC voltage output by the inverter circuit to an average value of the DC voltage; and supplying to the inverter circuit a switching signal generated based on the resulting voltage control ratio command, where the compensation value increases as the voltage of the reactor increases, and the absolute value of the compensation value decreases as the amplitude of the AC current output from the inverter circuit increases.

Citation List

Patent Literature

Patent Literature 1: Japanese Patent No. 5591215
Patent Literature 2: Japanese Patent No. 5712987

Summary of Invention

Technical Problem

In a motor control device that controls supplied power using a rectifier circuit, a capacitor (C) that allows DC voltage ripple, an LC filter composed of a reactor (L) and the capacitor, and an inverter circuit, ripple components of the DC voltage are extracted by the filter and applied as compensation to the inverter control. As a result, compensation control is performed even for ripple components associated with harmonics at $6 \times m$ times the power supply frequency (where m is an integer greater than or equal to 0), which may lead to a decrease in power factor and an increase in distortion in the input current from the power supply.

It is an object of the present disclosure to improve the power factor and reduce distortion in the input current from the power supply through LC resonance suppression control using a rectifier circuit, a capacitor (C) that allows DC voltage ripple, an LC filter composed of the capacitor and a reactor (L), and an inverter circuit.

Solution to Problem

A first aspect of the present disclosure provides a motor control device including: a rectifier circuit configured to rectify alternating current (AC) power output from a three-phase AC power supply and output direct current (DC) power; an inverter circuit having plural switching elements and configured to convert the DC power output from the rectifier circuit into AC power by a switching operation of the plurality of switching elements and supply the AC power to a motor; a capacitor coupled between input nodes of the inverter circuit and having a capacitance value that is set to allow fluctuations in voltage output from the rectifier circuit and to suppress ripple voltage caused by the switching operation of the inverter circuit; and a reactor disposed between the three-phase AC power supply and the capacitor and having an inductance value that is set to suppress ripple current caused by the switching operation. The capacitor and the reactor together function as a filter. The motor control device is configured to, at a timing when a phase Θ, which is based on a phase Θ of one of line-to-line voltages of the three-phase AC power supply, reaches $\pi/3 \times n$ (where n is an integer greater than or equal to zero), control a magnitude of an output voltage vector of the inverter circuit to change from positive to negative, or from negative to positive, with respect to an average value of the output voltage vector of the inverter circuit when the phase Θ is within a range satisfying Equation 1:

$$\text{(Equation 1)} \quad n \times \pi/3 \le \Theta < (n+1) \times \pi/3,$$

where n is an integer greater than or equal to zero.

The motor control device according to the above aspect can improve the power factor and reduce distortion in the input current from the power supply through LC resonance suppression control using a rectifier circuit, an LC composed of a capacitor (C) that allows DC voltage ripple and a reactor (L), and an inverter circuit.

A second aspect of the present disclosure provides the motor control device according to the first aspect, wherein the motor control device may be configured to control the output voltage of the inverter circuit such that the output voltage vector exhibits at least one ripple in synchronization with a period of LC resonance caused by the reactor and the capacitor, within a range in which the phase Θ satisfies Equation 2, based on the phase Θ of the one of the line-to-line voltages of the three-phase AC power supply:

$$\text{(Equation 2)} \quad n \times \pi/3 \le \Theta \le n \times \pi/3 + \pi/6,$$

where n is an integer greater than or equal to zero.

A third aspect of the present disclosure provides the motor control device according to the first aspect, wherein the motor control device may be configured to control the magnitude of the output voltage vector of the inverter circuit to change from positive to negative, or from negative to positive, in such a manner that the magnitude of change in the output voltage vector of the inverter circuit from positive to negative or from negative to positive is inversely proportional to a root mean square (RMS) value of a current flowing to the motor supplied with AC power from the inverter circuit.

A fourth aspect of the present disclosure provides the motor control device according to the first aspect, wherein a DC voltage across the capacitor may contain harmonic components of $6 \times m$ order (where m is an integer greater than or equal to zero) based on a fundamental-frequency component of the line-to-line voltage, an amplitude of the $6 \times m$-order harmonics (where m is an integer greater than or equal to zero) may be 6% or less of a DC component of the DC voltage, and the motor control device may be configured to control the output voltage of the inverter circuit such that a phase of the $6 \times m$-order harmonics (where m is an integer greater than or equal to zero) is $\pi \pm \pi/16$ with respect to a phase of the fundamental-frequency component of the line-to-line voltage.

A fifth aspect of the present disclosure provides the motor control device according to the first aspect, wherein a transfer characteristic between the DC voltage across the capacitor and a maximum of absolute values of three line-to-line voltages of the three-phase AC power supply may constitute a second-order lag element, and the motor control device may be configured to control the output voltage of the inverter circuit such that a damping factor of the transfer function of the second-order lag element is greater than 0.7.

A sixth aspect of the present disclosure provides the motor control device according to the first or fifth aspect, wherein the motor control device may be configured to control the output voltage of the inverter circuit such that a value of the DC voltage across the capacitor is less than or equal to the maximum of the absolute values of the three line-to-line voltages of the three-phase AC power supply.

Brief Description of Drawings

FIG. 1 illustrates an overall configuration of the motor control device according to an exemplary embodiment.

FIG. 2 illustrates values of line-to-line voltages output from an AC power supply.

FIG. 3 illustrates an output voltage vector.

FIG. 4 is a control block diagram of a control unit.

FIG. 5 illustrates control timings.

FIG. 6 illustrates an example model for controlling the motor control device.

FIG. 7 illustrates the original equivalent control model of the motor control device.

FIG. 8 is a circuit diagram illustrating a simplified equivalent circuit of the motor control device of FIG. 1.

FIG. 9 illustrates Comparative Example 1 of a control block for controlling the circuit shown in FIG. 8.

FIG. 10 illustrates Comparative Example 2 of a control block for controlling the circuit shown in FIG. 8.

FIG. 11 illustrates a control block of the present embodiment.

FIG. 12 illustrates the frequency characteristics of a transfer function in the absence of power supply impedance (hereinafter referred to as power supply Z).

FIG. 13 illustrates the frequency characteristics of a transfer function in the presence of the power supply Z.

FIG. 14 illustrates the frequency characteristics of a transfer function of a second-order lag element.

FIG. 15 illustrates the relationship between the magnitude of the power supply Z and the magnitude of a damping factor.

FIG. 16 illustrates DC voltage waveforms.

FIG. 17 illustrates harmonic components in the present embodiment.

Description of Embodiments

An exemplary embodiment of the present disclosure will now be described in detail with reference to the appended drawings.

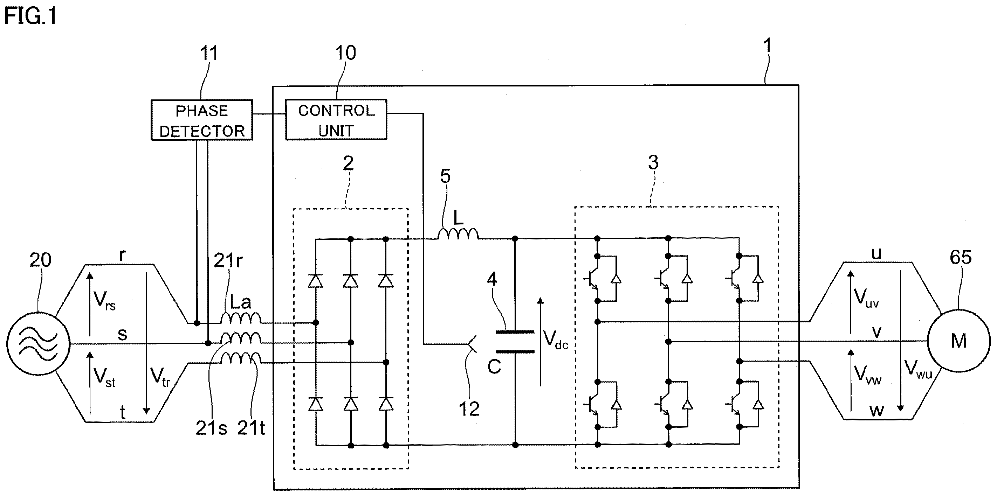

FIG. 1 illustrates an overall configuration of a motor control device 1 according to the present embodiment.

The motor control device 1 receives three-phase AC power from an AC power supply 20, converts the supplied AC power, and supplies it to a motor 65. The motor control device 1 includes a rectifier circuit 2, an inverter circuit 3, a capacitor 4, a reactor 5, and a control unit 10.

The rectifier circuit 2 is connected to the AC power supply 20 and rectifies the AC power output from the three-phase AC power supply to output DC power. The rectifier circuit 2 is a three-phase full-wave rectifier circuit.

The inverter circuit 3 converts the DC power output from the rectifier circuit 2 into three-phase AC power and supplies it to the motor 65. The three-phase AC power output from the inverter circuit 3 is denoted as the u-phase, v-phase, and w-phase, in order from the top line in FIG. 1. The voltage between the u-phase and the v-phase is denoted as a line-to-line voltage $V_{uv}$, the voltage between the v-phase and the w-phase as a line-to-line voltage $V_{vw}$, and the voltage between the w-phase and the u-phase as a line-to-line voltage $V_{wu}$.

The capacitor 4 is provided in a DC link section where the rectifier circuit 2 and the inverter circuit 3 are connected. The capacitance value of the capacitor 4 is set to tolerate fluctuations in voltage output from the rectifier circuit 2 and to suppress ripple voltage caused by a switching operation of the inverter circuit 3. The capacitance of the capacitor is denoted as C, the voltage across the capacitor 4 as $V_{dc}$, and the current flowing through the capacitor 4 as $i_c$. The current flowing from the DC link section to the inverter circuit 3 is denoted as $i_{inv}$. The capacitor 4 may be a film capacitor, for example.

The reactor 5 is provided between the three-phase AC power supply and the capacitor 4. The inductance value of the reactor 5 is set to suppress ripple current caused by a switching operation of the inverter circuit 3. The inductance value of the reactor 5 is denoted as L. In the illustrated example, the reactor 5 is provided between the rectifier circuit and the DC link section. However, the reactor 5 may be provided between the three-phase AC power supply and the rectifier circuit. The reactor 5 and the capacitor 4 constitute an LC filter.

The AC power supply 20 is a three-phase AC power supply. In FIG. 1, these three phases are denoted as the r-phase, s-phase, and t-phase, in order from the top line. Here, the voltage between the r-phase and the s-phase is denoted as a line-to-line voltage $V_{rs}$, the voltage between the s-phase and the t-phase as a line-to-line voltage $V_{st}$, and the voltage between the t-phase and the r-phase as a line-to-line voltage $V_{tr}$.

In FIG. 1, the impedances included in the AC power supply 20 itself and in the lines from the AC power supply 20 to the rectifier circuit 2 are denoted as power supply impedances 21r, 21s, and 21t. The value of the impedance per phase varies depending on the surrounding environment. Here, the value of the power supply impedance per phase is assumed to be $L_a$ [H].

For example, the motor 65 is an interior permanent magnet (IPM) motor. The motor 65 drives a compressor provided in a refrigerant circuit.

The control unit 10 operates the motor 65 efficiently by controlling the inverter circuit 3 and converting the AC power supplied to the motor 65. The control unit 10 includes devices for processing various types of information. The control unit 10 may be implemented using, among others, a microcomputer and a memory device that stores software for operating the microcomputer.

The control unit 10 includes a phase detector 11 and a voltage detector 12.

The phase detector 11 detects at least one of the line-to-line voltages of the three-phase AC power supply, converts it into pulses through processing by a phase detection circuit, and transmits the pulses to the control unit 10. In the illustrated example, the phase detector 11 detects the line-to-line voltage between the r-phase and the s-phase.

The voltage detector 12 detects the voltage across the capacitor 4.

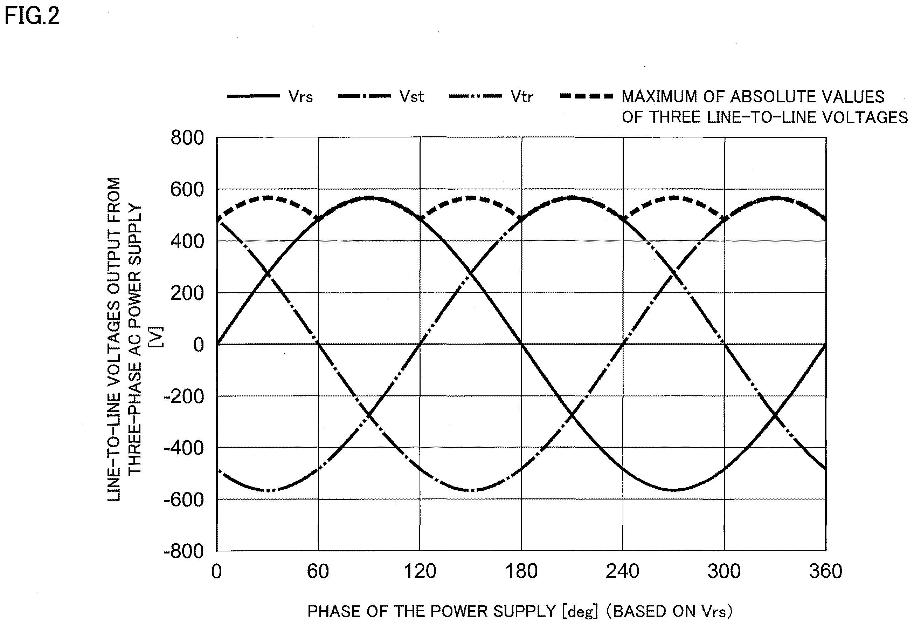

FIG. 2 illustrates values of the line-to-line voltages output from the AC power supply 20.

In FIG. 2, the vertical axis represents the values of the line-to-line voltages output from the three-phase AC power supply. In FIG. 2, the solid line represents the value of the line-to-line voltage $V_{rs}$, the dash-dot line represents the value of the line-to-line voltage $V_{st}$, and the dash-double dot line represents the value of the line-to-line voltage $V_{tr}$. The dashed line represents the maximum of the absolute values of the three line-to-line voltages. In the example shown in FIG. 2, the timing at which the line-to-line voltage $V_{rs}$ transitions from negative to positive passing through 0 V is defined as 0°. The phase of the line-to-line voltage $V_{st}$ is shifted by 240 degrees with respect to the phase of the line-to-line voltage $V_{rs}$, and the phase of the line-to-line voltage $V_{tr}$ is shifted by 120 degrees with respect to the phase of the line-to-line voltage $V_{rs}$. As described above, the capacitor 4 (see FIG. 1) tolerates fluctuations in voltage output from the rectifier circuit 2 (see FIG. 1). Thus, the capacitor 4 does not have the function of smoothing the three-phase full-wave rectified output from the rectifier circuit 2. As a result, the potential across the capacitor 4 corresponds to the maximum of the absolute values of the three line-to-line voltages, exhibiting ripple at a frequency six times that of the AC power supply 20.

Here, the output voltage vector of the inverter is defined.

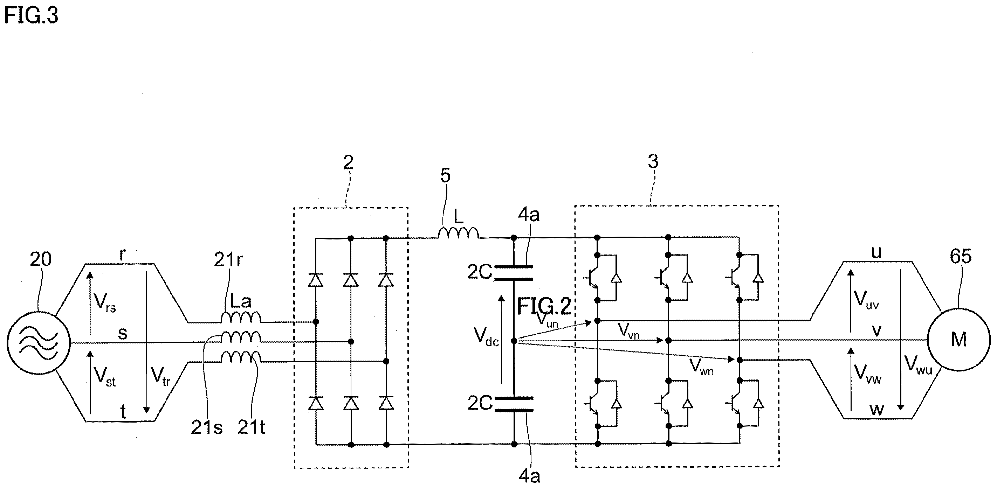

FIG. 3 illustrates the output voltage vector. The circuit diagram of FIG. 3 shows a state in which the capacitor 4 of FIG. 1 having a capacitance of C is divided into two capacitors 4a, each having a capacitance of 2C. Taking the potential between the two divided capacitors 4a as a reference, the voltage vector of the u-phase is defined as $V_{un}$. Similarly, taking the potential between the two divided capacitors 4a as a reference, the voltage vector of the v-phase is defined as $V_{vn}$, and the voltage vector of the w-phase as $V_{wn}$. Using these voltage vectors $V_{un}$, $V_{vn}$, and $V_{wn}$, the output voltage vector of the inverter is defined by Equation (1-1). The magnitude of the output voltage vector, $V_o$, is defined by Equation (1-2).

[Math. 1]

$$\begin{bmatrix} V_\alpha \\ V_\beta \end{bmatrix} = \sqrt{\frac{2}{3}} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} V_{un} \\ V_{vn} \\ V_{wn} \end{bmatrix} = \sqrt{\frac{2}{3}} \begin{bmatrix} \frac{1}{2}\left(V_{uv} - V_{wu}\right) \\ \frac{\sqrt{3}}{2} V_{vw} \end{bmatrix} \qquad \text{Equation (1-1)}$$

$$V_o = \sqrt{V_\alpha{}^2 + V_\beta{}^2} \qquad \text{Equation (1-2)}$$

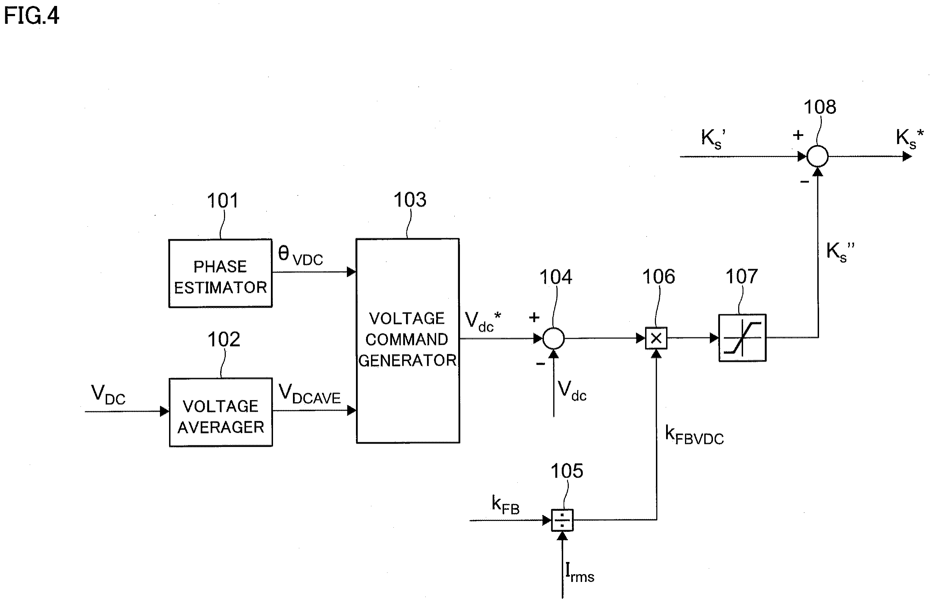

FIG. 4 is a control block diagram of the control unit 10 (see FIG. 1).

The control unit 10 includes a phase estimator 101, a voltage averager 102, a voltage command generator 103, a comparator 104, a gain corrector 105, a multiplier 106, a manipulated variable limiter 107, and a modulation index command generator 108.

[Phase Estimator]

The phase estimator 101 estimates the phase of the AC power supply 20. The phase estimator 101 obtains pulses transmitted from the phase detector 11 and calculates the phase. The method for estimating the phase is not limited. For example, the phase estimator 101 may detect the voltage $V_{dc}$ across the capacitor 4, apply filtering to the voltage $V_{dc}$ to extract its ripple component, and calculate the frequency and phase from the extracted ripple component.

[Voltage Averager]

The voltage averager 102 calculates an average value of the voltage $V_{dc}$. The voltage averager 102 passes the detected voltage $V_{dc}$ through a low-pass filter to calculate an average voltage $V_{DCAVE}$ of the voltage $V_{dc}$. Alternatively, the voltage averager 102 may average instantaneous values of $V_{dc}$ within a phase range from 60n° to 60(n-m)°, using the phase of the line-to-line voltage provided by the phase estimator 101 as a reference, where n and m are integers.

[Voltage Command Generator]

The voltage command generator 103 obtains the estimated phase of the power supply voltage, $\theta_{VDC}$, from the phase estimator 101 and the average voltage $V_{DCAVE}$ from the voltage averager 102. Based on the estimated phase $\theta$ of the power supply voltage and the average voltage $V_{DCAVE}$ obtained, the voltage command generator 103 generates an ideal three-phase full-wave rectified waveform and sets this ideal three-phase full-wave rectified waveform as a voltage command $V_{dc}{}^*$.

[Comparator]

The comparator 104 compares the voltage command $V_{dc}{}^*$ with the detected value $V_{dc}$ detected by the voltage detector 12 to extract the difference between these values. Specifically, the comparator 104 subtracts the detected value $V_{dc}$ from the voltage command $V_{dc}{}^*$.

[Gain Corrector]

The gain corrector 105 corrects a resonance suppression gain $k_{FB}$. In the present embodiment, resonance suppression is performed by controlling $i_{inv}$, and the resonance suppression gain $k_{FB}$ is corrected. In the present embodiment, resonance suppression is performed by controlling $i_{inv}$. However, since direct control of $i_{inv}$ is difficult, the output voltage vector of the inverter is manipulated for resonance suppression. In this case, if the output voltage vector is controlled with a ripple magnitude (resonance suppression gain $k_{FB}$) based on the assumption of manipulating $i_{inv}$, it will result in excessive ripple. Thus, the output voltage vector is corrected using a ripple magnitude (resonance suppression gain $k_{FB}$) that is adjusted according to a motor current RMS value $I_{rms}$. Specifically, the gain corrector 105 performs a division using the resonance suppression gain $k_{FB}$ as the numerator and the motor current RMS value $I_{rms}$ as the denominator.

[Manipulated Variable Limiter]

The manipulated variable limiter 107 sets upper and lower bounds on the manipulated variable to prevent abnormal output while avoiding interference with the manipulated variable for controlling the fundamental-frequency component of the motor current.

[Modulation Index Command Generator]

The modulation index command generator 108 (a subtractor) outputs a modulation index command value $K_s{}^*$ by subtracting a modulation index correction value $K_s''$ from a modulation index command value $K_s'$ used for controlling the fundamental-frequency component of the motor current. The magnitude $V_o$ of the output voltage vector is proportional to the modulation index command value $K_s{}^*$.

[Control Timing]

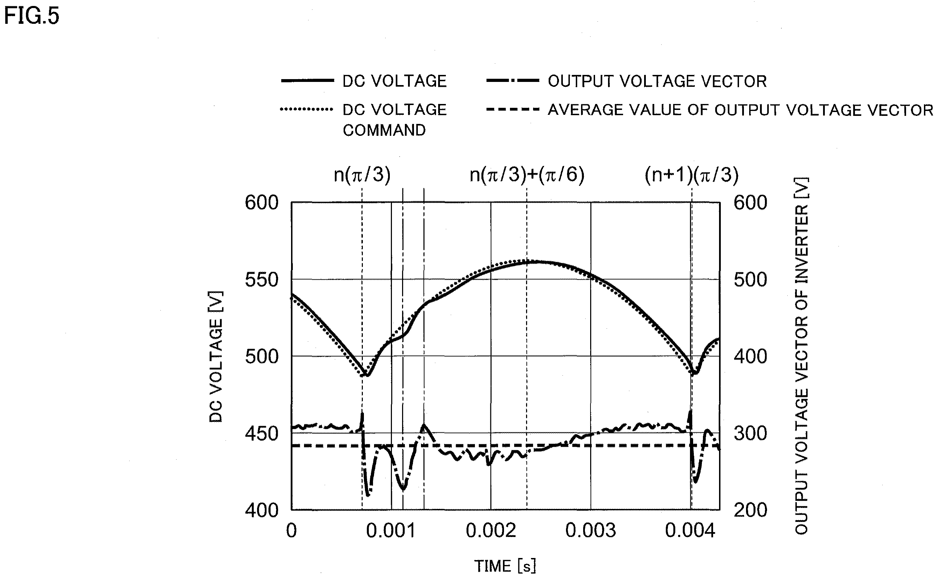

FIG. 5 illustrates control timings.
The control unit 10 has a voltage command $V_{dc}{}^*$ and extracts the difference between the voltage command $V_{dc}{}^*$ and the detected value $V_{dc}$ for compensation. The extracted difference represents the resonance component. Based on the extracted resonance component, the control unit 10 adjusts the modulation index to impose the resonance-induced ripple on $i_{inv}$, thereby suppressing resonance in the DC link section.

In FIG. 5, the vertical axis on the left represents the magnitude of the DC voltage [V], while the vertical axis on the right represents the magnitude of the inverter output voltage vector [V]. The horizontal axis represents time [s]. In FIG. 5, the solid line represents the detected value $V_{dc}$ of the DC voltage, and the dotted line represents the command value $V_{dc}{}^*$ generated by the voltage command generator 103. The dash-dot line represents the instantaneous value of the output voltage vector, and the dashed line represents the average value of the output voltage vector. In FIG. 5, the vertical dashed lines each indicate the phase of the DC voltage command. Note that the phase of the DC voltage command corresponds to the phase estimated by the phase estimator 101 (see FIG. 4). In FIG. 5, the vertical dash-double dot lines indicate some of the timings at which the output voltage vector exhibits ripple.

The control unit 10 (see FIG. 4) controls the magnitude of the output voltage vector of the inverter to change from positive to negative, or from negative to positive, with respect to the average value of the output voltage vector within a phase range from $n \times (\pi/3)$ to $(n+1) \times (\pi/3)$, where n is an integer. The control is performed at a timing when the phase, which is based on the phase of one of the line-to-line voltages of the three-phase AC power supply, reaches $n \times (\pi/3)$.

Here, the magnitude of the output voltage vector of the inverter being positive with respect to the average value of the output voltage vector means that the magnitude of the output voltage vector is greater than this average value. Conversely, the magnitude of the output voltage vector of the inverter being negative with respect to the average value of the output voltage vector means that the magnitude of the output voltage vector is smaller than this average value.

The control unit 10 may control the magnitude of the output vector of the inverter to change from positive to negative, or from negative to positive, not only at the timing of $(\pi/3) \times n$ with respect to the reference phase but also at more timings. In the present embodiment, the magnitude of the output voltage vector varies depending on the difference between the DC voltage command and the detected DC voltage. Thus, the line-to-line output voltage vector exhibits ripple in synchronization with the resonance period of the LC filter. In the illustrated example, the output voltage vector exhibits one or more ripples within the phase ($\theta$) range of $n \times (\pi/3) \leqq \theta \leqq n \times (\pi/3) + (\pi/6)$, in synchronization with the LC resonance period.

[Details of Gain Correction]

Next, the process by which the gain corrector 105 performs a division, using the resonance suppression gain $k_{FB}$ as the numerator and the motor current RMS value $I_{rms}$ as the denominator, will be described.

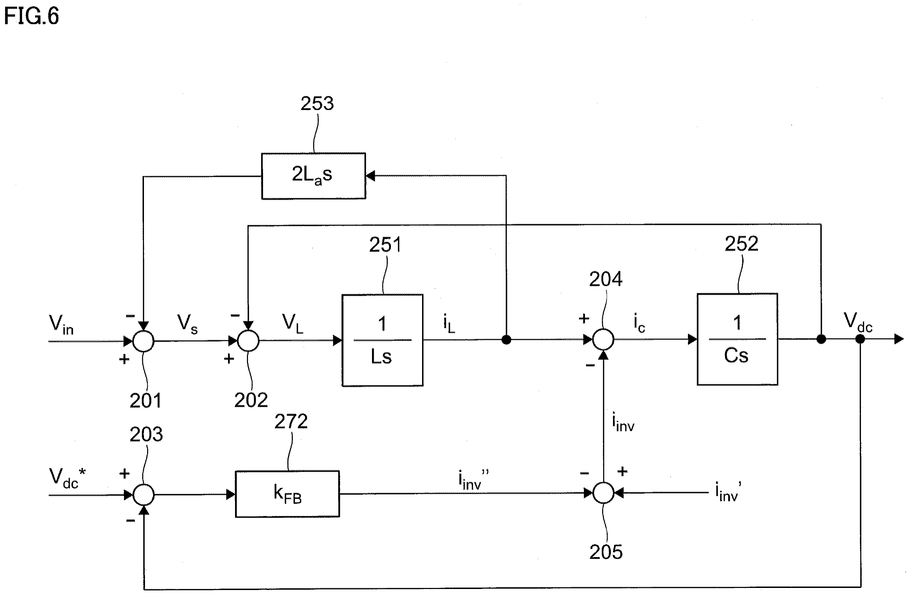

FIG. 6 illustrates an example model for controlling the motor control device 1. The current $i_{inv}'$ shown in FIG. 6 represents the value of the current determined by motor control. The current $i_{inv}''$ shown in FIG. 6 represents the value of the current manipulated by the resonance suppression control. The relationship among $i_{inv}$, $i_{inv}'$, and $i_{inv}''$ is given by Equation (1-3).

[Math. 2]

$$i_{inv} = i_{inv}' - i_{inv}'' \qquad\qquad \text{Equation (1-3)}$$

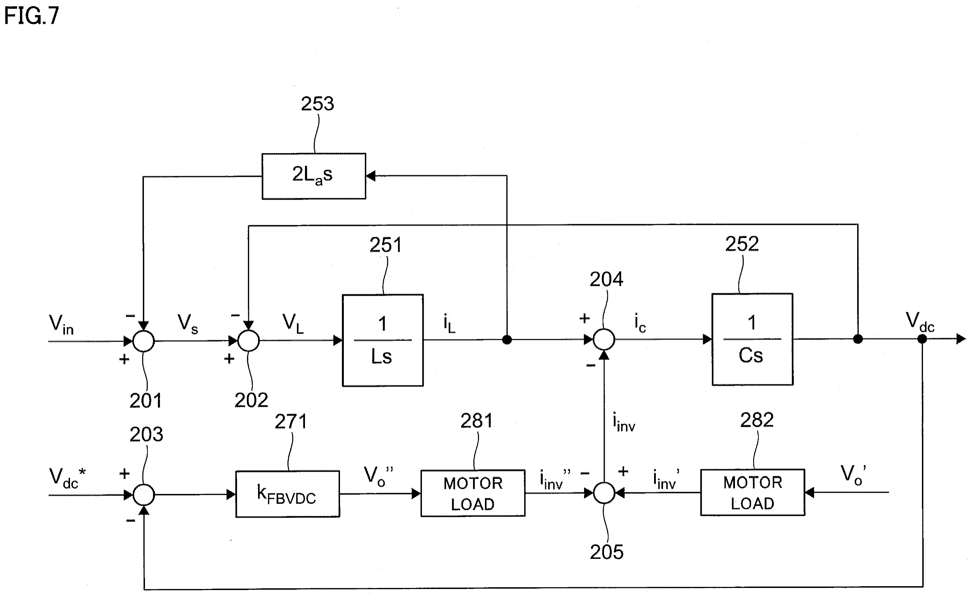

FIG. 7 illustrates the original equivalent control model of the motor control device 1.

In FIG. 7, the output voltage $V_0$ is applied to the motor load, and the current $i_{inv}$ is thereby determined. The value of the motor load varies depending on the operating point of the motor. In FIG. 7, the voltage $V_0'$ represents the voltage value determined by the motor operation, and the voltage $V_0''$ represents the voltage value manipulated by the resonance suppression control. The relationship among $V_0$, $V_0'$, and $V_0''$ is given by Equation (1-4).

[Math. 3]

$$V_o = V_o' - V_o'' \qquad\qquad \text{Equation (1-4)}$$

Here, the magnitude of ripple in $V_0$ is considered, taking the motor load into account. The magnitude of ripple in $V_0$ is determined by the modulation index correction value $K_s''$ for the inverter control. Therefore, the magnitude of ripple in $V_0$ can be adjusted by varying the resonance suppression gain correction value $K_{FBVDC}$. Equation (1-5) is derived from the subtractor 203 and the resonance suppression gain 272 in FIG. 6, and from Equation (1-3).

[Math. 4]

$$i_{inv} = i_{inv}' - k_{FB}(V_{dc}{}^* - V_{dc}) \qquad\qquad \text{Equation (1-5)}$$

In addition, Equation (1-6) is derived from FIG. 4.

[Math. 5]

$$K_s^* = K_s' - k_{FBVDC}(V_{dc}^* - V_{dc}) \qquad\qquad \text{Equation (1-6)}$$

Further, Equation (1-7) is derived from the subtractor 203 and the gain 271 in FIG. 7, and from Equation (1-4).
[Math. 6]

$$V_0 = V_0' - k_{FBVDC}(V_{dc}^* - V_{dc}) \qquad\qquad \text{Equation (1-7)}$$

Here, assuming an inverter efficiency of 1 and a motor power factor of 1, the relationship among the motor current RMS value $I_{rms}$, the inverter current $i_{inv}$, the inverter output voltage $V_0$, and the voltage $V_{dc}$ is expressed by Equation (1-8) below.
[Math. 7]

$$V_{dc} i_{inv} = \sqrt{3} V_o I_{rms} = \sqrt{3} K_s^* \frac{V_{dc}}{\sqrt{2}} I_{rms} \qquad\qquad \text{Equation (1-8)}$$

By transforming Equation (1-8), Equation (1-9) is derived, which expresses the relationship among the output voltage $V_0$, the voltage $V_{dc}$, and the modulation index command value $K_s^*$.
[Math. 8]

$$V_o = K_s^* \frac{V_{DC}}{\sqrt{2}} \qquad\qquad \text{Equation (1-9)}$$

By applying Equations (1-5) and (1-6) to Equation (1-8) and dividing both sides by $V_{dc}$, Equation (1-11) is derived.

[Math. 9]

$$V_{DC}\{i_{inv}' - k_{FB}(V_{dc}^* - V_{dc})\} = \sqrt{\tfrac{3}{2}}\{K_s' - k_{FBVDC}(V_{dc}^* - V_{dc})\}V_{dc}I_{rms} \quad \text{(Equation 1-10)}$$

$$i_{inv}' - k_{FB}(V_{dc}^* - V_{dc}) = \sqrt{\tfrac{3}{2}}K_s'I_{rms} - \sqrt{\tfrac{3}{2}}k_{FBVDC}(V_{dc}^* - V_{dc})I_{rms} \quad \text{(Equation 1-11)}$$

Here, the second term on the left-hand side and the second term on the right-hand side of Equation (1-11) are terms determined by the ripple magnitude in resonance suppression. In addition, the first term on the left-hand side and the first term on the right-hand side are terms determined by the operating point of the motor. By extracting the second terms on the left-hand side and right-hand side, which are determined by the ripple magnitude in resonance suppression, Equation (1-12) is obtained.
[Math. 10]

$$k_{FBVDC} = \sqrt{\tfrac{2}{3}}\frac{1}{I_{rms}}k_{FB} \qquad\qquad \text{Equation (1-12)}$$

Thus, the correction value of $K_{FBVDC}$ is inversely proportional to $I_{rms}$.

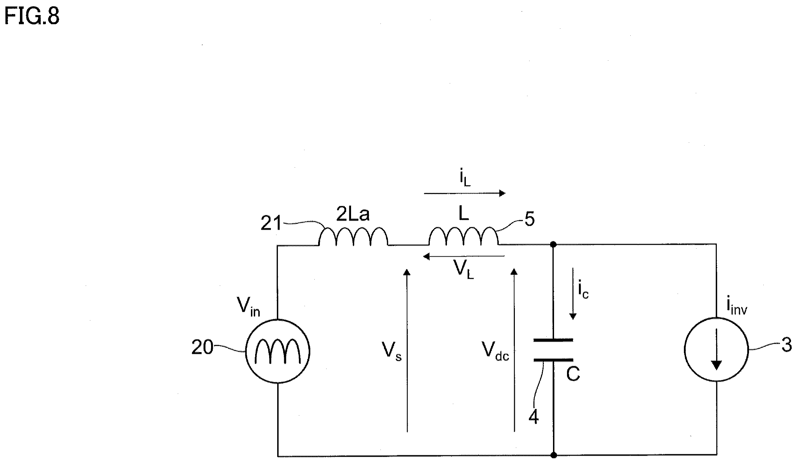

FIG. 8 is a circuit diagram illustrating a simplified equivalent circuit of the motor control device 1 of FIG. 1.
The voltage $V_{in}$ is the maximum of the absolute values of the three line-to-line voltages of the three-phase AC power supply 20. The current $i_L$ is the current flowing through the reactor 5. The voltage $V_s$ is the DC voltage output from the rectifier circuit 2. The voltage $V_{dc}$ is the voltage across the capacitor 4. The current $i_c$ is the current flowing through the capacitor 4. The current $i_{inv}$ is the current flowing through the inverter circuit 3.

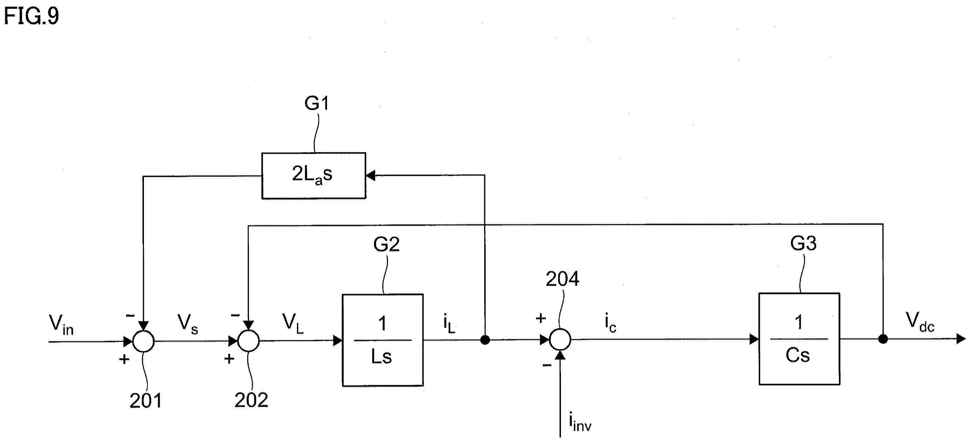

FIG. 9 illustrates Comparative Example 1 of a control block for controlling the circuit shown in FIG. 8.
Comparative Example 1 is a control model that does not perform resonance suppression control. Comparative Example 1 includes three subtractors 201, 202, and 204, and three transfer functions G1, G2, and G3.
The subtractor 201 feeds back the current $i_L$ through the transfer function G1, subtracts it from $V_{in}$, and outputs the voltage $V_s$.
The subtractor 202 feeds back the voltage $V_{dc}$, subtracts it from the voltage $V_s$, and outputs the voltage $V_L$.

The transfer function G2 takes the voltage $V_L$ as input and outputs the current $i_L$.

The subtractor 204 subtracts the current $i_{inv}$ from the current $i_L$ and outputs the current $i_c$.

The transfer function G3 takes the current $i_c$ as input and outputs the voltage $V_{dc}$.

By organizing this control block and deriving the transfer function $G_{NoDamp}(s) = V_{dc} / V_{in}$ representing the frequency characteristics, Equation (1-13) is obtained.

[Math. 11]

$$G_{NoDamp}(s) = \frac{\frac{1}{(L+2L_a)C}}{s^2 + \frac{1}{(L+2L_a)C}} \qquad \text{Equation (1-13)}$$

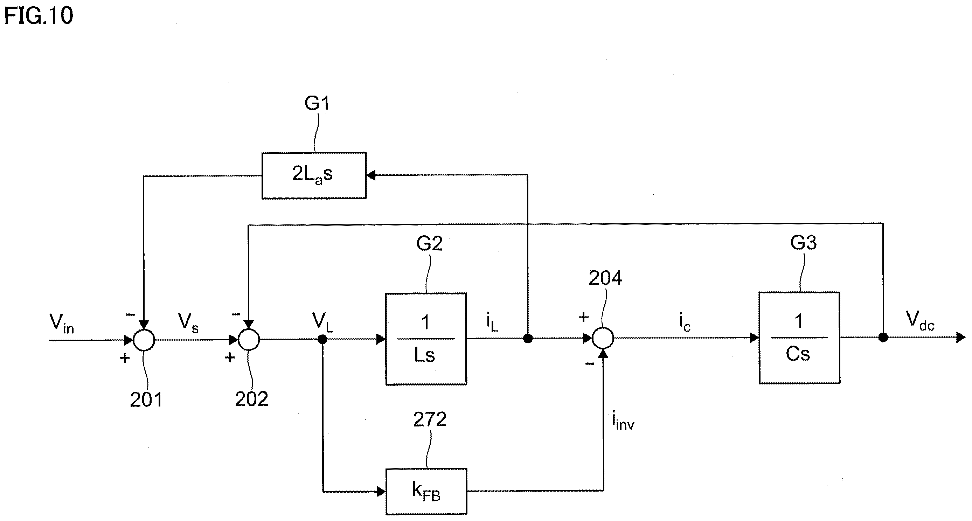

FIG. 10 illustrates Comparative Example 2 of a control block for controlling the circuit shown in FIG. 8.

Comparative Example 2 differs from Comparative Example 1 in that, in Comparative Example 2, the voltage $V_L$ across the reactor 5 is multiplied by the resonance suppression gain $k_{FB}$ to output the current $i_{inv}$. Comparative Example 2 includes three subtractors 201, 202, and 204, three transfer functions G1, G2, and G3, and a resonance suppression gain 272.

The subtractor 201 feeds back the current $i_L$ through the transfer function G1, subtracts it from $V_{in}$, and outputs the voltage $V_s$.

The subtractor 202 feeds back the voltage $V_{dc}$, subtracts it from the voltage $V_s$, and outputs the voltage $V_L$.

The transfer function G2 takes the voltage $V_L$ as input and outputs the current $i_L$.

The gain 272 multiplies the voltage $V_L$ by the gain $k_{FB}$ and outputs the current $i_{inv}$.

The subtractor 204 subtracts the current $i_{inv}$ from the current $i_L$ and outputs the current $i_c$.

The transfer function G3 takes the current $i_c$ as input and outputs the voltage $v_{dc}$.

By organizing the control block of Comparative Example 2 and deriving the transfer function $G_{VL}(s) = V_{dc} / V_{in}$ representing the frequency characteristics, Equation (1-14) is obtained.

[Math. 12]

$$G_{VL}(s) = \frac{\frac{k_{FB}Ls+1}{2L_{ac}C+LC}}{s^2 + \frac{k_{FB}L}{2L_{ac}C+LC}s + \frac{1}{2L_{ac}C+LC}} \qquad \text{Equation (1-14)}$$

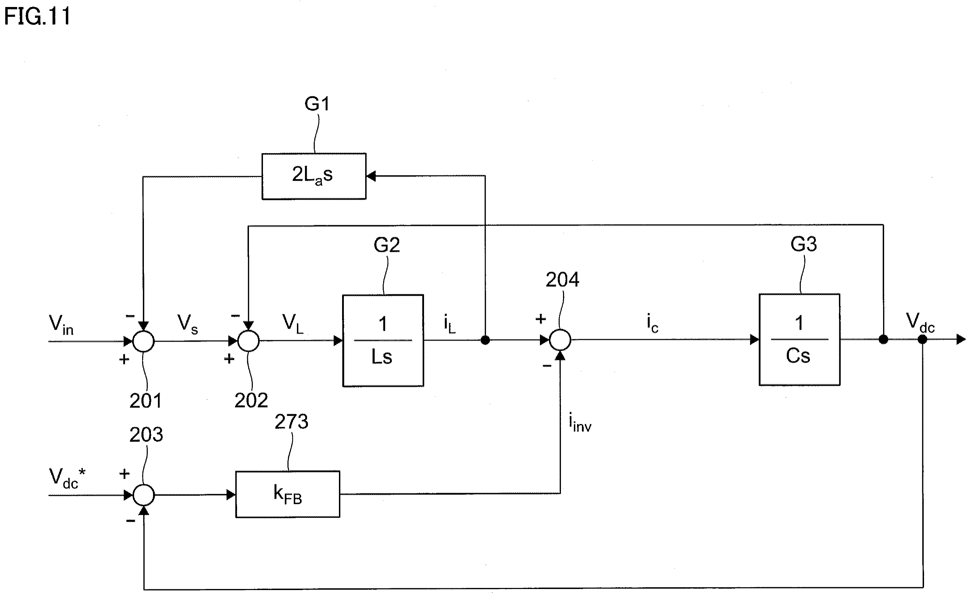

FIG. 11 illustrates a control block of the present embodiment.

The control block of the present embodiment includes four subtractors 201, 202, 203, and 204, three transfer functions G1 to G3, and a gain 273.

The subtractor 201 feeds back the current $i_L$ through the transfer function G1, subtracts it from $V_{in}$, and outputs the voltage $V_s$.

The subtractor 202 feeds back the voltage $V_{dc}$, subtracts it from the voltage $V_s$, and outputs the voltage $V_L$.

The subtractor 203 subtracts the detected value $V_{dc}$ from the command value $V_{dc}{}^*$.

The gain 273 multiplies the value obtained by subtracting the detected value $V_{dc}$ from the command value $V_{dc}{}^*$ by the gain $k_{FB}$ and outputs the current $i_{inv}$.

The subtractor 204 subtracts the current $i_{inv}$ from the current $i_L$ and outputs the current $i_c$.

The transfer function G3 takes the current $i_c$ as input and outputs the voltage $v_{dc}$.

By organizing the control block of the present embodiment and deriving the transfer function $G_{vdc}(s) = V_{dc} / V_{in}$ representing the frequency characteristics, Equation (1-15) is obtained.

[Math. 13]

$$G_{VDC}(s) = \frac{\frac{1}{(L+2L_{ac})C}}{s^2 + \frac{k_{FB}}{C}s + \frac{1}{(L+2L_{ac})C}} \qquad \text{Equation (1-15)}$$

Here, the frequency characteristics of the transfer function are illustrated using these Equations (1-13), (1-14), and (1-15).

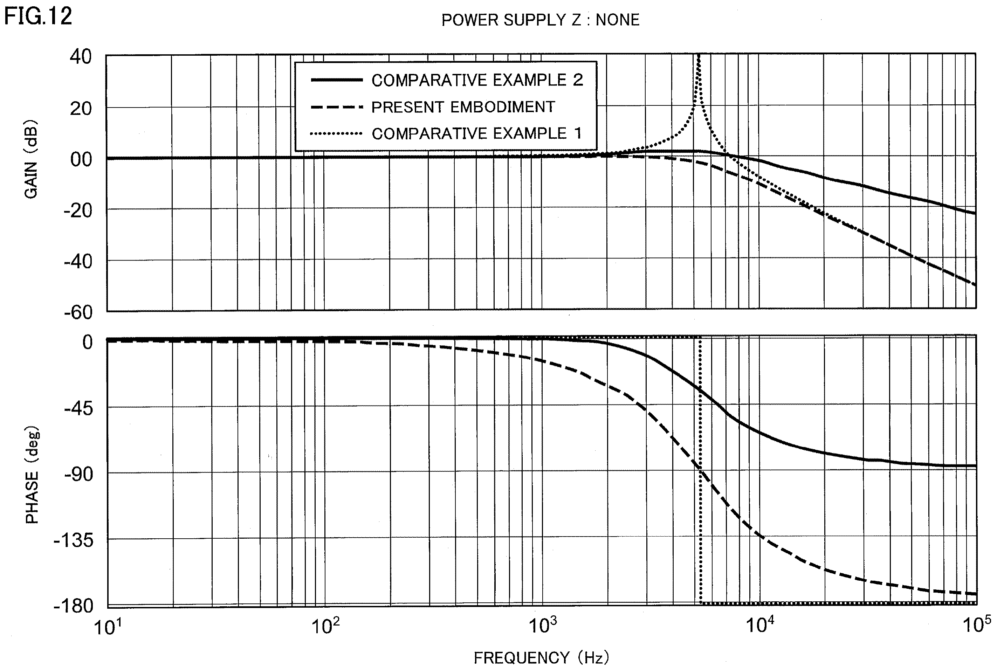

FIG. 12 illustrates the frequency characteristics of the transfer function in the absence of the power supply Z.

The horizontal axis represents the frequency [Hz], and the vertical axis represents the gain [dB] and phase [deg]. The solid lines represent Comparative Example 2, the dashed lines represent the present embodiment, and the dotted lines represent Comparative Example 1.

In the absence of the power supply Z, Comparative Example 1, which does not perform resonance suppression, shows an increase in gain at the resonance frequency. In contrast, both Comparative Example 2 and the present embodiment, which perform resonance control, exhibit a gain of 0 or less at the resonance frequency, suppressing the gain increase.

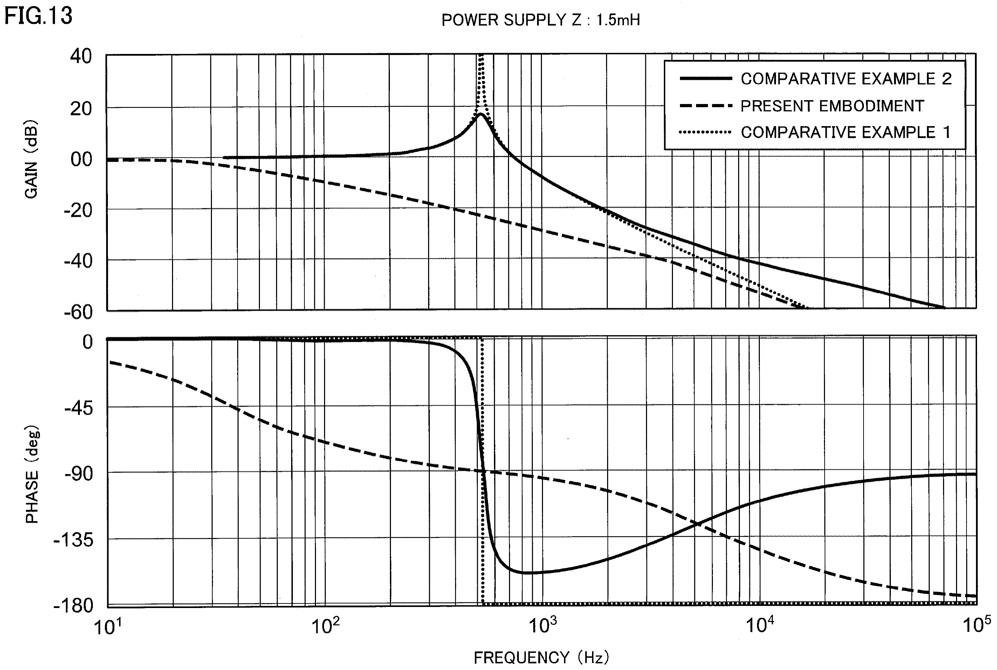

FIG. 13 illustrates the frequency characteristics of the transfer function in the presence of the power supply Z.

Similarly to FIG. 12, the horizontal axis in FIG. 13 represents the frequency [Hz], and the vertical axis in FIG. 13 represents the gain [dB] and phase [deg]. The solid lines represent Comparative Example 2, the dashed lines represent the present embodiment, and the dotted lines represent Comparative Example 1. The illustrated example shows the frequency characteristics of the transfer function when the magnitude of the power supply Z is 1.5 [mH].

In the presence of the power supply Z, both Comparative Examples 1 and 2 fail to attenuate the resonance component at the resonance frequency, resulting in a pronounced peak. In contrast, the resonance control of the present embodiment is able to attenuate the resonance component.

In the resonance control of the present embodiment, the gain characteristics remain at 0 [dB] or less, so that the maximum value of the DC voltage is less than or equal to the maximum of the absolute values of the multiple line-to-line voltages of the power supply.

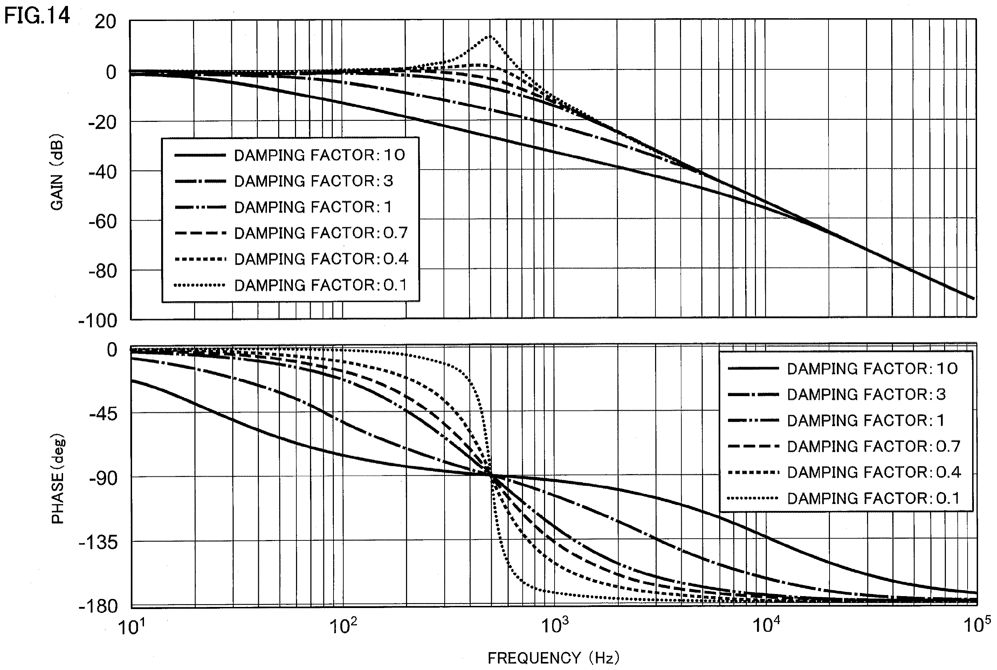

FIG. 14 illustrates the frequency characteristics of the transfer function of a second-order lag element.

In FIG. 14, the horizontal axis represents the frequency [Hz], and the vertical axis represents the gain [dB] and phase [deg]. The solid lines represent the frequency characteristics at a damping factor of 10. The dash-dot lines represent the frequency characteristics at a damping factor of 3, and the dash-double dot lines represent the frequency characteristics at a damping factor of 1. The long-dashed lines represent the frequency characteristics at a damping factor of 0.7, and the short-dashed lines represent the frequency characteristics at a damping factor of 0.4. The dotted lines represent the frequency characteristics at a damping factor of 0.1.

As shown in FIG. 14, when the damping factor is 0.1 or 0.4, the gain increases at the resonance frequency. On the other hand, when the damping factor is 0.7 or higher, the gain remains at 0 or less, and there is no gain increase at the resonance frequency.

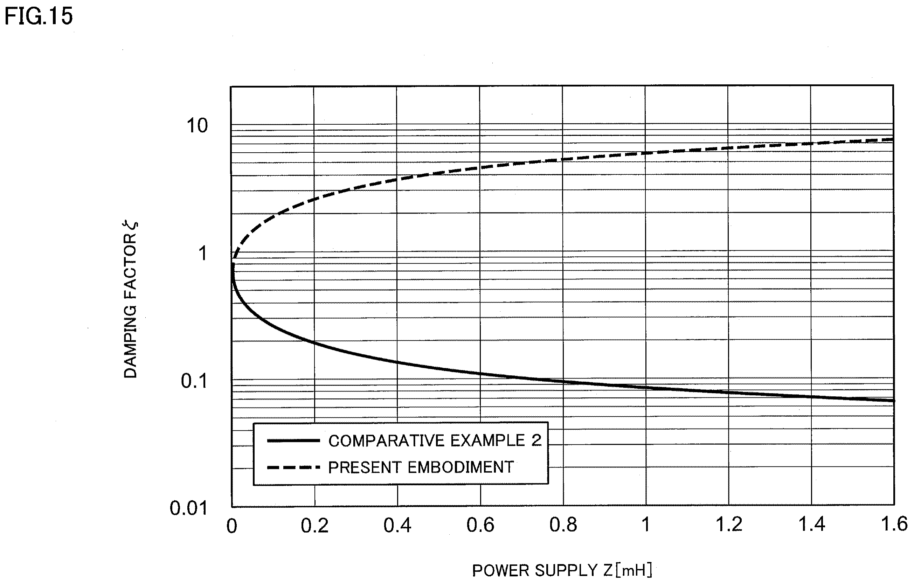

FIG. 15 illustrates the relationship between the magnitude of the power supply Z and the magnitude of the damping factor ξ.

In FIG. 15, the horizontal axis represents the power supply Z [mH], and the vertical axis represents the magnitude of the damping factor ξ. The solid line represents Comparative Example 2, and the dashed line represents the present embodiment. Here, the damping factor $\xi_{VL}$ of Comparative Example 2 can be expressed by Equation (1-16) based on Equation (1-14).

[Math. 14]

$$\xi_{VL} = \frac{k_{FB}}{2}\sqrt{\frac{L\left(\frac{L}{L+2L_{ac}}\right)}{C}} \qquad\qquad \text{Equation (1-16)}$$

Also, the damping factor $\xi_{VDC}$ of the present embodiment can be expressed by Equation (1-17) based on Equation (1-15).

[Math. 15]

$$\xi_{VDC} = \frac{k_{FB}}{2}\sqrt{\frac{L+2L_{ac}}{C}} \qquad\qquad \text{Equation (1-17)}$$

FIG. 15 shows that, under a uniquely determined resonance gain $k_{FB}$, the damping factor ξ varies with an increase in the power supply Z in both Comparative Example 2 and the present embodiment. In the illustrated example, the damping factor ξ in the present embodiment is 0.7 or higher at the power supply Z of zero, and the value of the damping factor ξ increases with an increase in the power supply Z. The value of the power supply Z varies depending on the commercial power environment and is often unknown. Thus, by setting the damping factor ξ to 0.7 when the power supply Z is zero, the damping factor ξ remains at or above 0.7 regardless of the value of the power supply Z, making it possible to suppress the resonance component. If the damping factor ξ is set to greater than 0.7 when the power supply Z is zero, the gain will become excessive when the power supply Z is zero, which may lead to instability in control.

[DC Voltage Waveform]

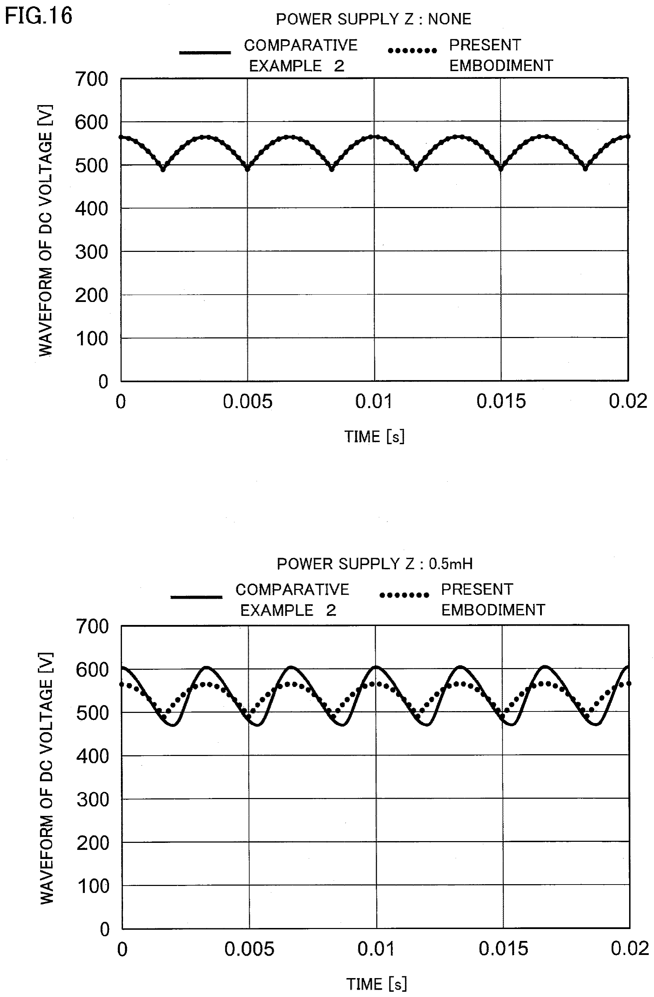

FIG. 16 illustrates DC voltage waveforms.

In FIG. 16, the upper graph shows a case where the power supply Z is absent, and the lower graph shows a case where the power supply Z is 0.5 [mH]. In each graph, the horizontal axis represents time [s], and the vertical axis represents the magnitude of the DC voltage [V]. In each graph, the waveform of the DC voltage in Comparative Example 2 is indicated by the solid line, while the waveform of the DC voltage in the present embodiment is indicated by the dotted line.

As shown by the lower waveforms in FIG. 16, when the power supply Z is 0.5 [mH], the difference between the maximum and minimum values of the DC voltage in Comparative Example 2 is greater than that in the present embodiment. As shown in FIG. 13, the resonance control of the present embodiment ensures that the gain characteristics remain at or below 0 [dB] even when the power supply Z is 1.5 [mH], so that the maximum value of the DC voltage does not exceed the maximum of the absolute values of the multiple line-to-line voltages of the power supply. On the other hand, in the presence of the power supply Z as shown in FIG. 13, Comparative Example 2 exhibits a gain increase at the resonance frequency and fails to sufficiently attenuate the resonance component. Therefore, as shown by the lower waveform in FIG. 16, in Comparative Example 2, the maximum value of the DC voltage becomes greater than the maximum of the absolute values of the multiple line-to-line voltages of the power supply.

[Harmonic Components]

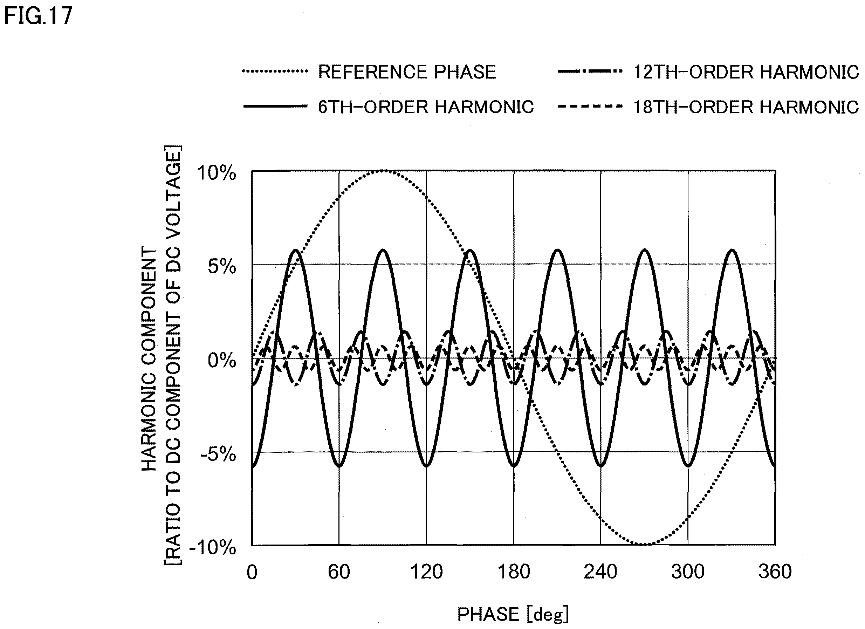

FIG. 17 illustrates harmonic components contained in the DC voltage waveform in the present embodiment.
In FIG. 17, the horizontal axis represents the phase [deg], and the vertical axis represents the ratio between the harmonic components and the DC component of the DC voltage. In the present embodiment, the capacitor 4 (see FIG. 1) does not perform smoothing of the DC voltage. Thus, the DC voltage contains harmonic components of the $6 \times m$ order (where m is an integer greater than or equal to 0) based on the fundamental-frequency component of the line-to-line voltage of the power supply. The DC voltage can be expressed by the following equation, divided into a DC component and harmonic components.
[Math. 16]

$$V_{dc} = V_{dc0} + \sum_{m=1}^{\infty} V_{dc6m} \cos\left(6m\omega_g t + \theta_{6m}\right) + \cdots \qquad \text{Equation (1-18)}$$

The first term on the right-hand side of Equation (1-18) represents the DC component of the DC voltage. The second term on the right-hand side of Equation (1-18) represents the $6 \times m$ order harmonic components. Further, carrier components and other elements are added as the third and subsequent terms on the right-hand side of Equation (1-18). In FIG. 17, the ratio between the DC component $V_{dc0}$ and the harmonic components $V_{dc6m} \cos(6m\omega_g t + \theta_{6m})$ is shown, where the harmonic components up to m = 3 are shown.
In FIG. 17, the dotted line represents the reference phase. Here, the reference phase refers to the phase of one of the line-to-line voltages of the AC power supply 20. In FIG. 17, the solid line represents the 6th-order harmonic, the dash-dot line represents the 12th-order harmonic, and the dashed line represents the 18th-order harmonic.
As shown in FIG. 17, the ratio of the 6th-order harmonic to the DC component of the DC voltage is kept within 6%. The ratio of the 12th-order harmonic to the DC component of the DC voltage is kept within 2%. Additionally, the ratio of the 18th-order harmonic to the DC component of the DC voltage is kept within 1%.
By using a command value for the DC voltage that has an amplitude and phase of the $6 \times m$ order harmonic components (where m is an integer greater than or equal to 0) of an ideal three-phase full-wave rectified waveform, the DC voltage can be controlled within the range defined by Equations (1-19) and (1-20).

[Math. 17]

$$V_{dc6m} \leq 0.06 \times V_{dc0} \qquad \text{Equation (1-19)}$$

$$\theta_{6m} = \pi \pm \frac{1}{18}\pi \qquad \text{Equation (1-20)}$$

[Functions and Advantageous Effects]

The motor control device 1 of the present disclosure includes: the rectifier circuit 2 configured to rectify AC power output from the three-phase AC power supply 20 and output DC power; the inverter circuit 3 having a plurality of switching elements and configured to convert the DC power output from the rectifier circuit 2 into AC power by a switching operation of the plurality of switching elements and supply the AC power to a motor; the capacitor 4 coupled between input nodes of the inverter circuit 3 and having a capacitance value that is set to allow fluctuations in voltage output from the rectifier circuit 2 and to suppress ripple voltage caused by the switching operation of the inverter circuit 3; and the reactor 5 disposed between the three-phase AC power supply 20 and the capacitor 4 and having an inductance value that is set to suppress ripple current caused by the switching operation. The capacitor 4 and the reactor 5 together function as a filter. The motor control device is configured to, at a timing when a phase Θ, which is based on a phase Θ of one of line-to-line voltages of the three-phase AC power supply 20, reaches π/3×n (where n is an integer greater than or equal to zero), control the magnitude of an output voltage vector of the inverter circuit 3 to change from positive to negative, or from negative to positive, with respect to an average value of the output voltage vector of the inverter circuit 3 when the phase Θ is within the range satisfying n×π/3 ≤ Θ < (n+1)×π/3 (where n is an integer greater than or equal to zero). The motor control device performs LC resonance suppression control using the rectifier circuit 2, the LC filter composed of the capacitor 4 that allows DC voltage ripple and the reactor 5, and the inverter circuit 3, thereby reducing distortion in the input current of the power supply.

The motor control device 1 is configured to control the output voltage of the inverter circuit 3 such that the output voltage vector exhibits at least one ripple in synchronization with a period of LC resonance caused by the reactor 5 and the capacitor 4, within the range in which the phase Θ satisfies n×π/3 ≤ Θ ≤ n×π/3 + π/6 (where n is an integer greater than or equal to zero), based on the phase Θ of one of the line-to-line voltages of the three-phase AC power supply 20.

The motor control device 1 is configured to control the magnitude of the output voltage vector of the inverter circuit 3 to change from positive to negative, or from negative to positive, in such a manner that the magnitude of change in the output voltage vector of the inverter circuit 3 from positive to negative or from negative to positive is inversely proportional to an RMS value of the current flowing to the motor supplied with AC power from the inverter circuit 3. This prevents a decrease in control stability or in resonance suppression performance.

The DC voltage across the capacitor 4 contains harmonic components of the 6×m order (where m is an integer greater than or equal to zero) based on the fundamental-frequency component of the line-to-line voltage. The amplitude of the 6×m-order harmonics (where m is an integer greater than or equal to zero) is 6% or less of the DC component of the DC voltage. The motor control device 1 is configured to control the output voltage of the inverter circuit 3 such that the phase of the 6×m-order harmonics (where m is an integer greater than or equal to zero) is π ± π/16 with respect to the phase of the fundamental-frequency component of the line-to-line voltage. This improves the power factor of the input current on the power supply side and suppresses power supply harmonics.

The transfer characteristic between the DC voltage across the capacitor 4 and a maximum of the absolute values of the three line-to-line voltages of the three-phase AC power supply 20 constitutes a second-order lag element, and the motor control device 1 is configured to control the output voltage of the inverter circuit 3 such that the damping factor of the transfer function of the second-order lag element is greater than 0.7. This reduces the degradation of resonance suppression performance.

The motor control device 1 is configured to control the output voltage of the inverter circuit 3 such that the value of the DC voltage across the capacitor 4 is less than or equal to the maximum of the absolute values of the three line-to-line voltages of the three-phase AC power supply 20. This reduces the degradation of resonance suppression performance.

Although exemplary embodiments have been described above, the technical scope of the present disclosure is not limited to the scope described in the above embodiments. It will be apparent from the appended claims that combinations of two or more of the above exemplary embodiments, as well as various changes or improvements to the above exemplary embodiments, are also within the technical scope of the present disclosure.

Reference Signs List

1 Motor control device
2 Rectifier circuit
3 Inverter circuit
4 Capacitor
5 Reactor
10 Control unit
11 Phase detector
12 Voltage detector
20 AC power supply
21r, 21s, 21t Power supply impedance
65 Motor
101 Phase estimator
102 Voltage averager
103 Voltage command generator
104 Comparator
105 Gain corrector

106 Multiplier
107 Manipulated variable limiter
108 Modulation index command generator

**Claims**

1. A motor control device comprising:

   a rectifier circuit configured to rectify alternating current (AC) power output from a three-phase AC power supply and output direct current (DC) power;
   an inverter circuit having a plurality of switching elements and configured to convert the DC power output from the rectifier circuit into AC power by a switching operation of the plurality of switching elements and supply the AC power to a motor;
   a DC link capacitor coupled between input nodes of the inverter circuit and having a capacitance value that is set to allow fluctuations in voltage output from the rectifier circuit and to suppress ripple voltage caused by the switching operation of the inverter circuit; and
   a reactor disposed between the three-phase AC power supply and the DC link capacitor and having an inductance value that is set to suppress ripple current caused by the switching operation, wherein
   the DC link capacitor and the reactor together function as a filter, and
   the motor control device is configured to, at a timing when a phase $\Theta$, which is based on a phase $\Theta$ of one of line-to-line voltages of the three-phase AC power supply, reaches $\pi/3 \times n$ (where n is an integer greater than or equal to zero), control a magnitude of an output voltage vector of the inverter circuit to change from positive to negative, or from negative to positive, with respect to an average value of the output voltage vector of the inverter circuit when the phase $\Theta$ is within a range satisfying Equation 1:

   $$(\text{Equation 1}) \ n \times \pi/3 \leq \Theta < (n+1) \times \pi/3,$$

   where n is an integer greater than or equal to zero.

2. The motor control device according to claim 1, wherein the motor control device is configured to control an output voltage of the inverter circuit such that the output voltage vector exhibits at least one ripple in synchronization with a period of LC resonance caused by the reactor and the DC link capacitor, within a range in which the phase $\Theta$ satisfies Equation 2, based on the phase $\Theta$ of the one of the line-to-line voltages of the three-phase AC power supply:

   $$(\text{Equation 2}) \ n \times \pi/3 \leq \Theta \leq n \times \pi/3 + \pi/6,$$

   where n is an integer greater than or equal to zero.

3. The motor control device according to claim 1, wherein the motor control device is configured to control the magnitude of the output voltage vector of the inverter circuit to change from positive to negative, or from negative to positive, in such a manner that the magnitude of change in the output voltage vector of the inverter circuit from positive to negative or from negative to positive is inversely proportional to a root mean square (RMS) value of a current flowing to the motor supplied with AC power from the inverter circuit.

4. The motor control device according to claim 1, wherein

   a DC voltage across the DC link capacitor contains harmonic components of $6 \times m$ order (where m is an integer greater than or equal to zero) based on a fundamental-frequency component of the line-to-line voltage,
   an amplitude of the $6 \times m$-order harmonics (where m is an integer greater than or equal to zero) is 6% or less of a DC component of the DC voltage, and
   the motor control device is configured to control an output voltage of the inverter circuit such that a phase of the $6 \times m$-order harmonics (where m is an integer greater than or equal to zero) is $\pi \pm \pi/16$ with respect to a phase of the fundamental-frequency component of the line-to-line voltage.

5. The motor control device according to claim 1, wherein

a transfer characteristic between a DC voltage across the DC link capacitor and a maximum of absolute values of three line-to-line voltages of the three-phase AC power supply constitutes a second-order lag element, and the motor control device is configured to control an output voltage of the inverter circuit such that a damping factor of the transfer function of the second-order lag element is greater than 0.7.

6. The motor control device according to claim 1 or 5, wherein
the motor control device is configured to control an output voltage of the inverter circuit such that a value of a DC voltage across the DC link capacitor is less than or equal to a maximum of absolute values of three line-to-line voltages of the three-phase AC power supply.

# FIG.1

FIG.2

EP 4 746 276 A1

FIG.3

FIG.4

FIG.5

FIG.6

EP 4 746 276 A1

FIG.7

EP 4 746 276 A1

FIG.8

EP 4 746 276 A1

FIG.9

EP 4 746 276 A1

FIG.10

FIG.11

EP 4 746 276 A1

FIG.12

POWER SUPPLY Z : NONE

COMPARATIVE EXAMPLE 2
PRESENT EMBODIMENT
COMPARATIVE EXAMPLE 1

GAIN (dB)

PHASE (deg)

FREQUENCY (Hz)

# FIG.13

EP 4 746 276 A1

FIG.14

GAIN (dB)

20
0
-20
-40
-60
-80
-100

PHASE (deg)

0
-45
-90
-135
-180

FREQUENCY (Hz)

$10^1$ $10^2$ $10^3$ $10^4$ $10^5$

DAMPING FACTOR: 10
DAMPING FACTOR: 3
DAMPING FACTOR: 1
DAMPING FACTOR: 0.7
DAMPING FACTOR: 0.4
DAMPING FACTOR: 0.1

FIG.15

EP 4 746 276 A1

FIG.16

POWER SUPPLY Z : NONE

COMPARATIVE EXAMPLE 2 ⋯⋯⋯ PRESENT EMBODIMENT

POWER SUPPLY Z : 0.5mH

COMPARATIVE EXAMPLE 2 ⋯⋯⋯ PRESENT EMBODIMENT

FIG.17

········· REFERENCE PHASE
—·· 12TH-ORDER HARMONIC
——— 6TH-ORDER HARMONIC
– – – 18TH-ORDER HARMONIC

HARMONIC COMPONENT
[RATIO TO DC COMPONENT OF DC VOLTAGE]

10%
5%
0%
-5%
-10%

0    60    120    180    240    300    360
PHASE [deg]

## INTERNATIONAL SEARCH REPORT

| International application No. |
|---|
| **PCT/JP2025/027500** |

**A. CLASSIFICATION OF SUBJECT MATTER**

*H02M 7/48*(2007.01)i; *H02P 27/04*(2016.01)i
FI: H02M7/48 E; H02P27/04

According to International Patent Classification (IPC) or to both national classification and IPC

**B. FIELDS SEARCHED**

Minimum documentation searched (classification system followed by classification symbols)

H02M7/48; H02P27/04

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2024/033958 A1 (MITSUBISHI ELECTRIC CORPORATION) 15 February 2024 (2024-02-15)<br>paragraphs [0010]-[0099], fig. 1-7 | 1-6 |
| A | WO 2018/061342 A1 (DAIKIN INDUSTRIES, LTD.) 05 April 2018 (2018-04-05)<br>paragraphs [0031]-[0063], fig. 1-7 | 1-6 |

☐ Further documents are listed in the continuation of Box C.     ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 October 2025** | **21 October 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2025/027500**

| Patent document cited in search report | | | Publication date (day/month/year) | Patent family member(s) | | | Publication date (day/month/year) |
|---|---|---|---|---|---|---|---|
| WO | 2024/033958 | A1 | 15 February 2024 | CN | 119654784 | A | |
| WO | 2018/061342 | A1 | 05 April 2018 | US | 2020/0007049 | A1 | |
| | | | | paragraphs [0054]-[0091], fig. 1-7 | | | |
| | | | | EP | 3522353 | A1 | |
| | | | | AU | 2017336032 | A | |
| | | | | CN | 109804546 | A | |

Form PCT/ISA/210 (patent family annex) (July 2022)

**REFERENCES CITED IN THE DESCRIPTION**

**Patent documents cited in the description**

- JP 5591215 B

- JP 5712987 B